# EUROPEAN PATENT SPECIFICATION

(11) **EP 4 439 319 B1**
(45) Date of publication and mention of the grant of the patent: **14.01.2026**
(21) Application number: 23214745.4
(22) Date of filing: 06.12.2023
(51) Int. Cl.: G06F 13/40, G06F 13/42, H01R 12/72, H01R 12/73, H01R 27/00

(54) **PASS-THROUGH CONNECTOR**
DURCHGANGSVERBINDER
CONNECTEUR DE PASSAGE

(30) Priority: 01.04.2023 US 202318129837
(43) Date of publication of application: 02.10.2024
(73) Proprietor: Intel Corporation, Santa Clara, CA 95054 (US)
(72) Inventor: THEODOSEAU, Philip, Hillsboro, OR 97124 (US); XIAO, Kai, Portland, OR 97229 (US)
(74) Representative: Maiwald GmbH

(56) References cited:
- CN-A- 111 244 657
- US-A1- 2017 371 823

## Description

### FIELD

The present disclosure relates in general to computing systems, and more specifically, to connections to facilitate electronic communication.

### BACKGROUND

Advances in semi-conductor processing and logic design have permitted an increase in the amount of logic that may be present on integrated circuit devices. As a corollary, computer system configurations have evolved from a single or multiple integrated circuits in a system to multiple cores, multiple hardware threads, and multiple logical processors present on individual integrated circuits, as well as other interfaces integrated within such processors. A processor or integrated circuit typically comprises a single physical processor die, where the processor die may include any number of cores, hardware threads, logical processors, interfaces, memory, controller hubs, etc.

As a result of the greater ability to fit more processing power in smaller packages, smaller computing devices have increased in popularity. Smartphones, tablets, ultrathin notebooks, and other user equipment have grown exponentially. However, these smaller devices are reliant on servers both for data storage and complex processing that exceeds the form factor. Consequently, the demand in the high-performance computing market (e.g., server space) has also increased. For instance, in modem servers, there is typically not only a single processor with multiple cores, but also multiple physical processors (also referred to as multiple sockets) to increase the computing power. But as the processing power grows along with the number of devices in a computing system, the communication between sockets and other devices becomes more critical.

In fact, interconnects have grown from more traditional multi-drop buses that primarily handled electrical communications to full blown interconnect architectures that facilitate fast communication. Further, as the demand for future high performance processors increases, demand grows for interconnect architectures capable of supporting the corresponding high data rates made available by next generation processors.

US 2017/371823 A1 discloses a three-connector routing system that includes a pass-through module having a routing function to route bidirectional lanes between connectors to facilitate functional reconfiguration of a motherboard. The system includes a routing connector and two active connectors. The routing function routes bidirectional lanes to a PCIe connector from each of the active connectors through the routing connector.

### SUMMARY

The invention is set out in the appended set of claims. The dependent claims set out particular embodiments.

### BRIEF DESCRIPTION OF THE DRAWINGS

FIG. 1 illustrates a block diagram of an example computing system.
FIG. 2 illustrates an embodiment of a computing system including an interconnect architecture.
FIG. 3 illustrates an embodiment of a transmitter and receiver pair for an interconnect architecture.
FIG. 4 is a perspective view of an example socket connector.
FIG. 5 illustrates an example add-in card device.
FIGS. 6A-6B are simplified block diagrams illustrating an internal side view of an example pass-through connector device.
FIG. 7 is a simplified block diagram illustrating a top view of an example pass-through connector device.
FIG. 8 is a simplified block diagram illustrating a perspective view of an example pass-through connector device.
FIGS. 9A-9C are simplified block diagrams illustrating example pin configurations of an example pass-through connector device.
FIG. 10 illustrates an embodiment of a block diagram for a computing system including a multicore processor.
FIG. 11 illustrates another embodiment of a block diagram for a computing system.

Like reference numbers and designations in the various drawings indicate like elements.

### DETAILED DESCRIPTION

The subject matter disclosed herein relates to improving performance characteristics of point-to-point interconnects in computing platforms through improved sockers or connectors, such as card edge connectors. A card edge connector is a portion of a circuit board that includes contact fingers disposed on an outer surface of the circuit board and is configured to mate with a matching connector, which may be referred to herein as an edge connector socket or simply a "connector socket", "socket", or "slot". Edge connectors may be included in a wide variety of electronic components, including memory chips, expansion cards, graphics cards, network interface cards, among others. Card edge connectors may be used to couple a component of a computer to a printed circuity board used to implement a computing platform, such as a single-board computer (CBS), system host board (SHB), motherboard, or other PCB, which includes sockets configured to accept card edge connectors or other device connectors. Card edge connectors may also be included in add-in-cards that couple to a computer, such as a laptop, through an expansion slot. Card edge connectors and other connectors may also be used in server platforms, including blade servers, rack servers, towers servers, etc.

In some cases, the geometry of an edge connector and the connector socket may be dictated to some degree by an industry specification. For example, for a device compatible with a Peripheral Component Interconnect Express (PCIe) protocol, the edge connector and socket geometry may be dictated, in part, a corresponding protocol specification, such as the PCIe Special Interest Group (SIG) Card Electromechanical (CEM) Specification, among other examples. In some embodiments, the discussed pass-through connector device may incorporate a pair of connector sockets according to a PCIe-based protocol, such as a PCIe Gen 1, Gen 2, Gen 3, Gen 4, Gen 5, Gen 6, or future PCIe protocol yet to be developed. Furthermore, although some example embodiments in the present disclosure may refer specifically to PCIe, it should be appreciated that an example pass-through connector device may incorporate connector elements of a variety of form factors and geometries defined in accordance with any suitable communication protocol, including PCI, PCIe, Universal Serial Bus (USB), Compute Express Link (CXL), Universal Chiplet Interconnect Express (UCIe), UltraPath Interconnect (UPI), QuickPath Interconnect^{™} (QPI), DDR memory, and other proprietary or non-proprietary communication protocols.

In the following description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other by means of electromagnetic coupling (e.g., a link that incorporates one or more intermediate devices over which the coupling of the two or more elements is accomplished).

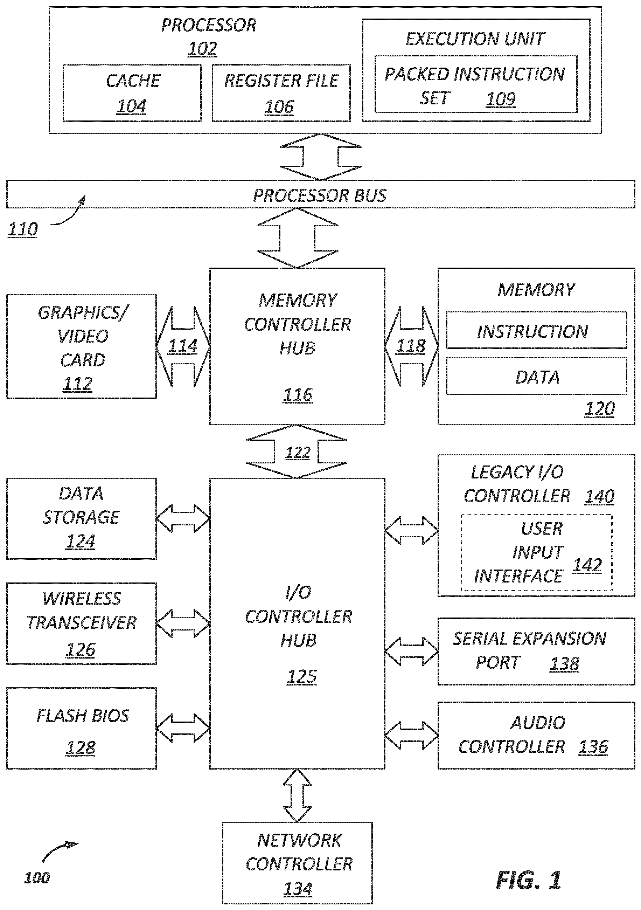

FIG. 1 is a block diagram of an example of a computer system, wherein one or more of the interconnects implement one or more features in accordance with embodiments described herein. As used herein, the term interconnect refers to any type of communicative coupling between components, including card edge connectors or other end devices, for example. The system 100 includes a component, such as a processor 102 to employ execution units including logic to perform algorithms for process data, in accordance with the present disclosure, such as in the embodiment described herein. System 100 is representative of processing systems based on the PENTIUM III^{™} PENTIUM 4^{™}, Xeon^{™}, Itanium, XScale^{™} and/or StrongARM^{™} microprocessors available from Intel Corporation of Santa Clara, Calif., although other systems (including PCs having other microprocessors, engineering workstations, set-top boxes and the like) may also be used. In embodiments, the system 100 executes an operating system, embedded software, and/or graphical user interfaces, may also be used. Thus, embodiments of the present disclosure are not limited to any specific combination of hardware circuitry and software.

Furthermore, embodiments are not limited to computer systems. Rather, embodiments of the present disclosure can be used in any suitable electronic devices that include edge connectors, including handheld devices and embedded applications. Some examples of handheld devices include cellular phones, Internet Protocol devices, digital cameras, personal digital assistants (PDAs), and handheld PCs. Embedded applications can include a micro controller, a digital signal processor (DSP), system on a chip, network computers (NetPC), set-top boxes, network hubs, wide area network (WAN) switches, or any other suitable system.

The processor 102 can include one or more execution units 108 to implement an algorithm that is to perform at least one instruction. Although some embodiments may be described in the context of a single processor desktop or server system, embodiments may also be included in a multiprocessor system. System 100 is an example of a 'hub' system architecture. The computer system 100 includes a processor 102 to process data signals. The processor 102, as one illustrative example, includes a complex instruction set computer (CISC) microprocessor, a reduced instruction set computing (RISC) microprocessor, a very long instruction word (VLIW) microprocessor, a processor implementing a combination of instruction sets, or any other processor device, such as a digital signal processor, for example. The processor 102 is coupled to a processor bus 110 that transmits data signals between the processor 102 and other components in the system 100. In some implementations, elements of bus 110 or other interconnect for coupling elements of system 100 (e.g., graphics accelerator 112, memory controller hub 116, memory 120, I/O controller hub 126, wireless transceiver 132, Flash BIOS 134, network controller 136, audio controller 138, serial expansion port 140, I/O controller 128, etc.) may be implemented, at least in part, using one or more pass-through connector device.

In one embodiment, the processor 102 includes a Level 1 (L1) internal cache memory 104. Depending on the architecture, the processor 102 may have a single internal cache or multiple levels of internal caches. Other embodiments include a combination of both internal and external caches depending on the particular implementation and needs. Register file 106 is to store different types of data in various registers including integer registers, floating point registers, vector registers, banked registers, shadow registers, checkpoint registers, status registers, and instruction pointer register.

Execution unit 108, including logic to perform integer and floating point operations, also resides in the processor 102. The processor 102, in one embodiment, includes a microcode (ucode) ROM to store microcode, which when executed, is to perform algorithms for certain macroinstructions or handle complex scenarios. Here, microcode is potentially updateable to handle logic bugs/fixes for processor 102. In some embodiments, execution unit 108 includes logic to handle a packed instruction set 109. By including the packed instruction set 109 in the instruction set of a general-purpose processor 102, along with associated circuitry to execute the instructions, the operations used by many multimedia applications may be performed using packed data in a general-purpose processor 102. Thus, many multimedia applications are accelerated and executed more efficiently by using the full width of a processor's data bus for performing operations on packed data. This potentially eliminates the need to transfer smaller units of data across the processor's data bus to perform one or more operations, one data element at a time.

Alternate embodiments of an execution unit 108 may also be used in micro controllers, embedded processors, graphics devices, DSPs, and other types of logic circuits. The system 100 includes a memory 120. The memory 120 includes a dynamic random access memory (DRAM) device, a static random access memory (SRAM) device, flash memory device, or other memory device. The memory 120 stores instructions and/or data represented by data signals that are to be executed by the processor 102.

Note that an example pass-through connector device, such as discussed herein, may be utilized to implement two or more connectors associated with the interconnects shown in FIG. 1 or other systems described and shown herein, among other examples. For instance, a pass-through connector device may also be associated with the processor bus 110 (e.g., Intel Quick Path Interconnect (QPI) or other known high performance computing interconnect), a high bandwidth memory path 118 to memory 120, a point-to-point link to graphics accelerator 112 (e.g., a Peripheral Component Interconnect express (PCIe) compliant fabric), a controller hub interconnect 126, an I/O or other interconnect (e.g., USB, PCI, PCIe) for coupling the other illustrated components. Some examples of such components include the audio controller 138, firmware hub (flash BIOS) 134, wireless transceiver 132, data storage 130, legacy I/O controller 142 containing user input and keyboard interfaces 144, a serial expansion port 140 such as Universal Serial Bus (USB), and a network controller 136. The data storage device 130 can include a hard disk drive, a floppy disk drive, a CDROM device, a flash memory device, or other mass storage device.

It is to be understood that the block diagram of FIG. 1 is not intended to indicate that the computing system 100 is to include all of the components shown in FIG. 1. Rather, the computing system 100 can include fewer or additional components not illustrated in FIG. 1. Furthermore, the components may be coupled to one another according to any suitable system architecture, including the system architecture shown in FIG. 1 or any other suitable system architecture that uses card edge connectors to facilitate digital communications between components. For example, embodiments of the present techniques can also be implemented in any suitable electronic device, including ultra-compact form factor devices, such as System-On-a-Chip (SOC) and multi-chip modules.

A primary goal of PCIe is to enable components and devices from different vendors to inter-operate in an open architecture, spanning multiple market segments; Clients (Desktops and Mobile), Servers (Standard and Enterprise), and Embedded and Communication devices. PCI Express is a high performance, general purpose I/O interconnect defined for a wide variety of future computing and communication platforms. Some PCI attributes, such as its usage model, load-store architecture, and software interfaces, have been maintained through its revisions, whereas previous parallel bus implementations have been replaced by a highly scalable, fully serial interface. The more recent versions of PCI Express take advantage of advances in point-to-point interconnects, Switch-based technology, and packetized protocol to deliver new levels of performance and features. Power Management, Quality Of Service (QoS), Hot-Plug/Hot- Swap support, Data Integrity, and Error Handling are among some of the advanced features supported by PCI Express.

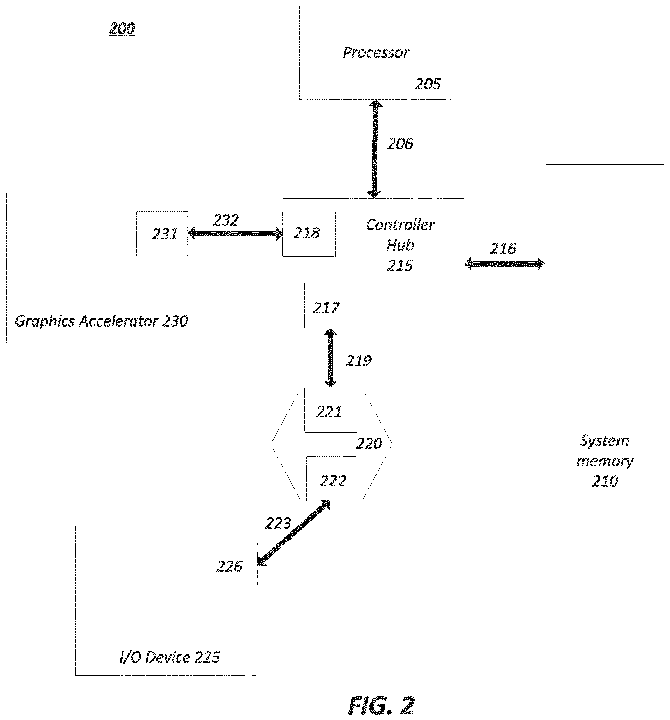

Referring to FIG. 2, an embodiment of a fabric composed of point-to-point Links that interconnect a set of components is illustrated. System 200 includes processor 205 and system memory 210 coupled to controller hub 215. Processor 205 includes any processing element, such as a microprocessor, a host processor, an embedded processor, a co-processor, or other processor. Processor 205 is coupled to controller hub 215 through front-side bus (FSB) 206. In one embodiment, FSB 206 is a serial point-to-point interconnect as described below. In another embodiment, link 206 includes a serial, differential interconnect architecture that is compliant with different interconnect standard.

System memory 210 includes any memory device, such as random access memory (RAM), non-volatile (NV) memory, or other memory accessible by devices in system 200. System memory 210 is coupled to controller hub 215 through memory interface 216. Examples of a memory interface include a double-data rate (DDR) memory interface, a dual-channel DDR memory interface, and a dynamic RAM (DRAM) memory interface.

In one embodiment, controller hub 215 is a root hub, root complex, or root controller in a PCIe interconnection hierarchy. Examples of controller hub 215 include a chipset, a memory controller hub (MCH), a northbridge, an interconnect controller hub (ICH) a southbridge, and a root controller/hub. Often the term chipset refers to two physically separate controller hubs, e.g., a memory controller hub (MCH) coupled to an interconnect controller hub (ICH). Note that current systems often include the MCH integrated with processor 205, while controller 215 is to communicate with I/O devices, in a similar manner as described below. In some embodiments, peer-to-peer routing is optionally supported through root complex 215. In some implementations, a pass-through connector device may be utilized for connections to root complex 215 to reduce the number of connections between the root complex and endpoint devices, reduce interconnect trace lengths, simplify complexity of the interconnect fabric, and reduce signal integrity loss, among other example benefits.

Here, controller hub 215 is coupled to switch/bridge 220 through serial link 219. Input/output modules 217 and 221, which may also be referred to as interfaces/ports 217 and 221, include/implement a layered protocol stack to provide communication between controller hub 215 and switch 220. In one embodiment, multiple devices are capable of being coupled to switch 220.

Switch/bridge 220 routes packets/messages from device 225 upstream, e.g., up a hierarchy towards a root complex, to controller hub 215 and downstream, e.g., down a hierarchy away from a root controller, from processor 205 or system memory 210 to device 225. Switch 220, in one embodiment, is referred to as a logical assembly of multiple virtual PCI-to-PCI bridge devices. Device 225 includes any internal or external device or component to be coupled to an electronic system, such as an I/O device, a Network Interface Controller (NIC), an add-in card, an audio processor, a network processor, a hard-drive, a storage device, a CD/DVD ROM, a monitor, a printer, a mouse, a keyboard, a router, a portable storage device, a Firewire device, a Universal Serial Bus (USB) device, a scanner, and other input/output devices. Often in the PCIe vernacular, such as device, is referred to as an endpoint. Although not specifically shown, device 225 may include a PCIe to PCI/PCI-X bridge to support legacy or other version PCI devices. Endpoint devices in PCIe are often classified as legacy, PCIe, or root complex integrated endpoints.

Graphics accelerator 230 is also coupled to controller hub 215 through serial link 232. In one embodiment, graphics accelerator 230 is coupled to an MCH, which is coupled to an ICH. Switch 220, and accordingly I/O device 225, is then coupled to the ICH. I/O modules 231 and 218 are also to implement a layered protocol stack to communicate between graphics accelerator 230 and controller hub 215. Similar to the MCH discussion above, a graphics controller or the graphics accelerator 230 itself may be integrated in processor 205.

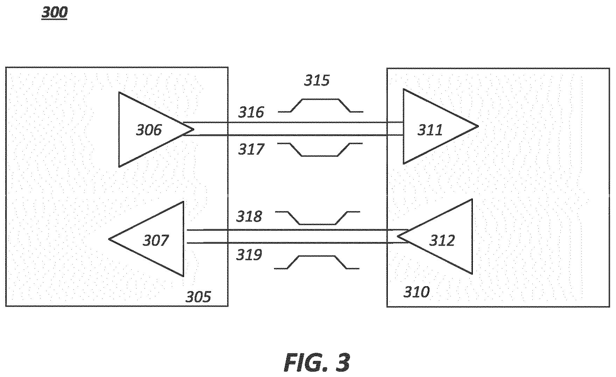

Referring next to FIG. 3, an embodiment of a PCIe serial point to point fabric is illustrated. Although an embodiment of a PCIe serial point-to-point link is illustrated, a serial point-to-point link is not so limited, as it includes any transmission path for transmitting serial data. In the embodiment shown, a basic PCIe link includes two, low-voltage, differentially driven signal pairs: a transmit pair 306/311 and a receive pair 312/307. Accordingly, device 305 includes transmission logic 306 to transmit data to device 310 and receiving logic 307 to receive data from device 310. In other words, two transmitting paths, e.g., paths 316 and 317, and two receiving paths, e.g., paths 318 and 319, are included in a PCIe link.

A transmission path refers to any path for transmitting data, such as a transmission line, a copper line, an optical line, a wireless communication channel, an infrared communication link, or other communication path. A connection between two devices, such as device 305 and device 310, is referred to as a link, such as link 315. A link may support one lane - each lane representing a set of differential signal pairs (one pair for transmission, one pair for reception). To scale bandwidth, a link may aggregate multiple lanes denoted by xN, where N is any supported Link width, such as 1, 2, 4, 8, 12, 16, 32, 64, or wider.

A differential pair refers to two transmission paths, such as lines 316 and 317, to transmit differential signals. As an example, when line 316 toggles from a low voltage level to a high voltage level, e.g., a rising edge, line 317 drives from a high logic level to a low logic level, e.g., a falling edge. Differential signals potentially demonstrate better electrical characteristics, such as better signal integrity, e.g., cross-coupling, voltage overshoot/undershoot, ringing, etc. This allows for better timing window, which enables faster transmission frequencies.

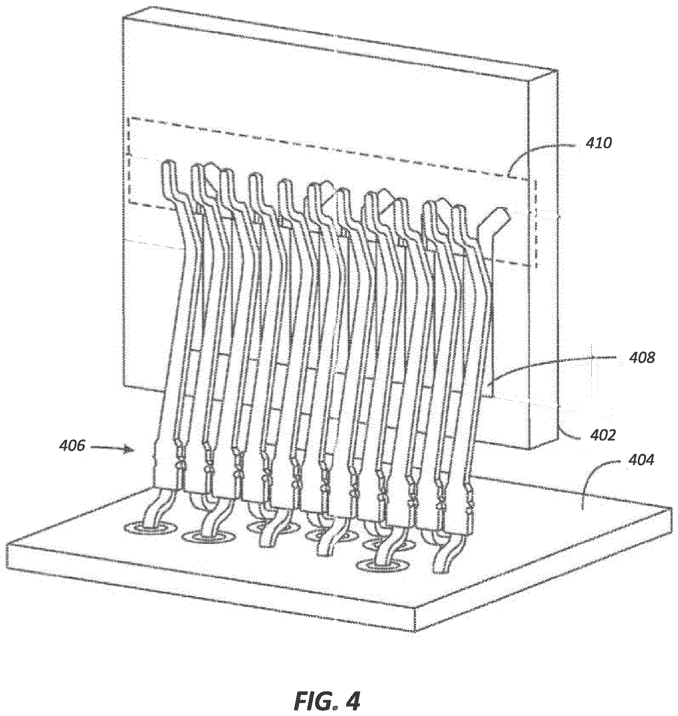

FIG. 4 is a perspective view of an example connector socket in accordance with some embodiments (e.g., one of the connector sockets incorporated in an example pass-through connector device). A socket connector 400 facilitates a communicative coupling between components of an add-in-card 402 and other devices of a computing platform, including cables used to connect a computing device to the socket connector, among other examples. The platform may include a baseboard 404 or circuit board included in any type of suitable electronic device. For example, the baseboard 404 may be a motherboard of a desktop computer, laptop computer, server, and the like. The baseboard 404 may also be a circuit board included in a handheld device such as a tablet PC, mobile phone, and the like. The add-in-card 402 may be any type of suitable electronic component or module, and can add a specific functionality to the basic functions provided by components of the baseboard 404. For example, the add-in-card 402 may be a graphics accelerator, network interface card, wireless communication interface, a memory module such a Dual-Inline Memory Modules (DIMM), or passive bus riser card mounting additional card edge connectors, among others. As used herein, the term card edge connector is used to refer to the components of both the add-in-card 402, the connector hardware 406, and the baseboard 404 that facilitate the communicative coupling between the add-in-card 402 and the baseboard 404.

The baseboard 404 includes a connector including a plurality of contacts or pins 406. Each of the contacts 406 may be routed to electronic components of the baseboard 404 through conductors, or traces, disposed within or on the surface of the baseboard 404. The add-in-card 402 includes a plurality of conductive contacts referred to herein as edge fingers 408. The edge fingers 408 are configured to make contact with a respective contact pin of the connector when the add-in-card 402 is coupled to the baseboard 404 via the connector. At least some of the edge fingers 408 are routed to electronic components of the add-in-card 402 through conductors disposed within or on the surface of the add-in-card 402. Some of the edge fingers 408 may be ground contact fingers that are coupled to a reference plane 410 of the add-in-card 402 via a corresponding connector pin, among other examples. The card edge connector 400 also includes a non-conductive connector shell (not shown) that facilitates the mechanical coupling between add-in-card 402 and the baseboard 404.

Each contact and its corresponding contact finger may be assigned a specific functionality. For example, some contacts may be ground pins coupled to a reference plane, while other contacts may be signal contacts coupled to specific components of the baseboard. In some embodiments, the specific arrangement of contacts, also referred to as the pin assignment, may be determined by a manufacturer of the baseboard device or a by an industry specification such as the PCIe SIG CEM specification, among others.

There may be some implementations where individual edge fingers and/or mating connector pins may be present, but left electrically unconnected, or "floating", with respect to the components or other interconnect on the baseboard and/or add-in-card). In yet another configuration, the metal pads comprising individual edge-fingers may be absent in some signal positions, presenting bare, non-conductive PCB material to the mating connector contact, if present. One reason for having such a non-connected contact or edge finger may be that the electrical function assigned for these contacts in the industry specification is redundant, in the case of multiple ground contact, for example. Another reason for having a non-connected or absent contact or edge finger could be that the signal function assigned to the pin is not implemented in the baseboard or add in card, such as an unconnected, absent, or unused ground or sideband signal (e.g., PRESENT, RESERVED, or JTAG) pin or contact, among other examples.

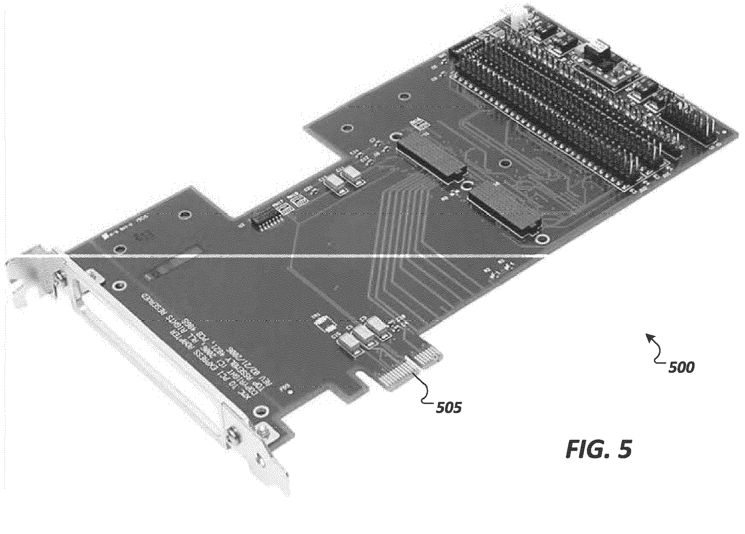

FIG. 5 illustrates an example add-in card that can be coupled to other devices of a computing platform using a socket connector, such as a socket connector of an example pass-through connector device. mounted to a baseboard 500 so as to communicatively couple to the baseboard by one of a set of conductors. The add-card can be configured for a specific purpose, so as to extend functionality of the computer to which it is connected. In one example implementation, the add-in card comprises a device compatible with a PCI-based interconnect protocol, such as PCIe. For instance, the add-in card may include a connector 505 with conductive contact fingers or finger pads that are brought into contact with corresponding pins of a compatible socket connector mounted to a PCB implementing at least a portion of a computing platform. The connector pins may facilitate a connection between the corresponding conductor or finger pad of the add-in card and a trace or bus of the backplane of the PCB or, in cases of a pass-through connector device, the pad or conductor of another computing device coupled on another socket connector of the pass-through connector, among other examples. An endpoint device may, in some implementations, have one or more socket connectors itself, which may also be implemented using pass-through connectors, among other examples.

Traditionally, each socket connector provided for on a platform (e.g., a server racks, server blades, motherboard, or other printed circuit board (PCB)) may be implemented as a single connector element that is placed and coupled (e.g., soldered) to conductive terminals (e.g., pads, bumps, etc.) on a PCB. Each socket connector may accept a respective device (e.g., an add-in card, expansion cards, etc.) or an input/output cable coupling a device to the PCB via the socket connector. Traces on or within the PCB may implement a backplane, buses, or other interconnections between pins of one socket connector with pins of other connectors or devices mounted on the PCB. A variety of different socket connectors may be provided on the platform, with varying formfactors and technologies, to enable a corresponding array of potentially diverse devices (e.g., compatible with the varying connector formfactors) to be connected to and interoperate on the platform, including host processor devices, graphics processing devices, memory cards, network interface cards and controllers, among other examples.

In an improved system, at least one or more pairs of individual socket connectors on a computing platform may be replaced by a multi-socket pass-through connector device, such as described herein. The pass-through connector device may have two connector receptacles, with each connector receptacle (e.g., implementing a respective socket connector) defined according to a particular formfactor (e.g., a formfactor defined according to or in compliance with a PCIe or CXL-based specification). In an example pass-through connector device, a portion of the pins or conductors of a first one of the two connector receptacles may be directly connected to a corresponding portion of the pins or conductors of the second one of the two connector receptacles of the pass-through connector device. This enables a shortened direct connection to be made between the two devices when inserted into the respective two connector receptacles using the pass-through connector device. By reducing the interconnect trace lengths between the two devices, attenuation (dB) budget loss may be mitigated and minimum signal integrity loss may be achieved between the devices connected using the pass-through connector device. Indeed, direct interconnect between the two devices may be particularly beneficial on pins designated for high-speed signaling, for instance, by reducing the number of junctions between interconnected devices (e.g., the root complex and an endpoint device), as well as help to reduce the overall complexity of the PCB's backplane layout. Additionally, in some implementations, other pins (e.g., associated with power or lower speed signals) of one or more of the two connectors receptacles of the pass-through connector device may be connected to a trace, bus, or backplane of the PCB to which the pass-through connector device is mounted.

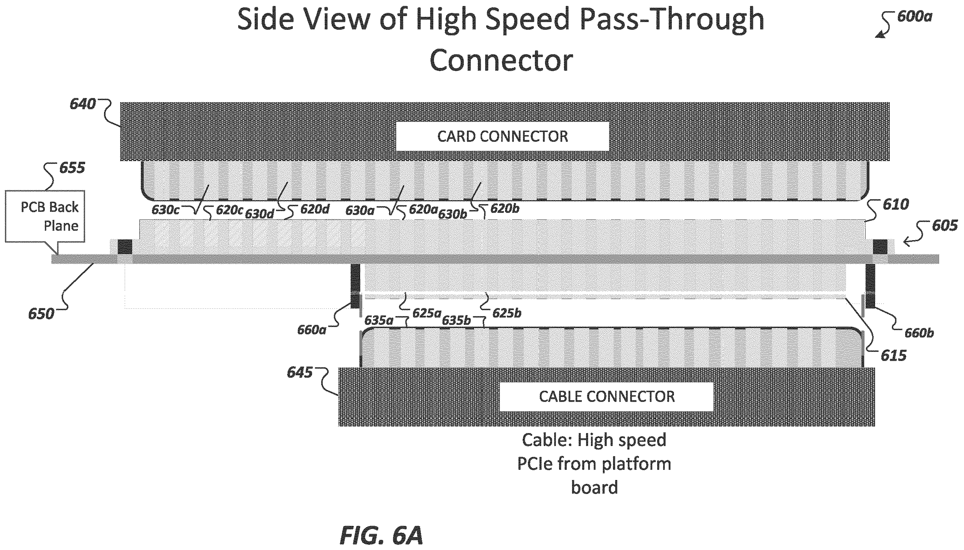

Turning to FIGS. 6A-6B, simplified block diagram 600a-b are shown illustrating a cross-sectional side view of an example pass-through connector device 605. The pass-through connector device 605 includes a first connector receptacle 610 to implement a first socket connector and a second connector receptacle 615 to implement a second socket connector. In this example, the dimensions of the first connector receptacle may be different from that of the second connector receptacle such that devices of different form factors may be connected via a respective one of the first connector receptacle 610 or the second connector receptacle 615. For instance, connector receptacles may have differing numbers and layouts of pins, different geometries and physical dimensions, etc.). A respective set of pins (e.g., 620a-d, 625a-b) may be provided in each of the first connector receptacle and the second connector receptacle to correspond with the contact pads or fingers (e.g., 630a-d, 635a-b) of respective devices having form factors compatible with the respective socket connector. As one example, a first connector receptacle 610 may be configured to implement a socket connector of an endpoint device 640 (e.g., a device compatible with a particular form factor definition (e.g., a PCIe form factor, Enterprise and Data Center Standard Form Factor (EDSFF), etc.), while a second connector receptacle 615 may be configured to implement a socket connector to accept another device form factor, such as a connector of a cable 645 (e.g., for an MCIO cable card, among other examples) coupled to a host platform (e.g., with a root complex). In some implementations, alignment registration key elements (e.g., 660a-b) may be provided to assist in proper alignment of contact fingers with pins of the socket connectors of the pass-through connector device 605, among other example features. Other pass-through connector device implementations may include different pairs of socket connectors, implementing different types of sockets and form factors.

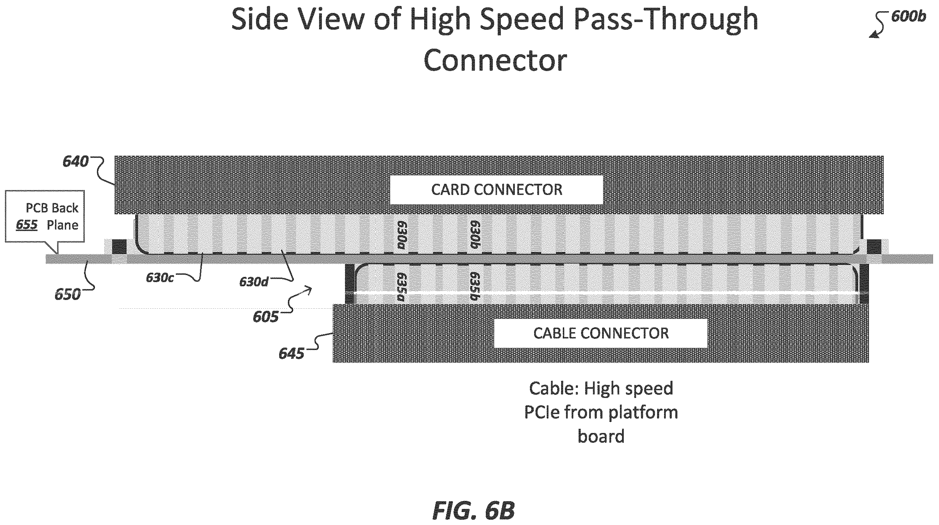

At least some of the pins of pass-through connector device 605 may facilitate a direct connection between the first and second socket connectors of the pass-through connector device 605. For instance, pins 620a and 625a may be directly connected within the pass-through connector device 605 such that high speed signals are directly passed through the pass-through connector device between pins 620a and 625a without any contact to the backplane of the PCB. Pins of the two socket connectors that are to facilitate a direct connection may be substantially aligned such that the pin pitch of directly connected pin sets are at least partially aligned (e.g., although imperfect alignment (e.g., skew) may be permitted in some instances, while still permitted the direct connection between the pins in the pass-through connector device). In some implementations, directly connected pins (e.g., pins 620a and 625a) in two different socket connectors of the pass-through connector device may be formed from the same conductive contact and effectively act as a common pin to facilitate a direct connection between the contact pads or fingers (e.g., 630a and 635a) of the devices (e.g., 640, 645) connected using the pass-through connector device 605. FIG. 6A shows the pass-through connector device 605 before respective devices (e.g., 640, 645) are inserted into corresponding connector receptacles 610, 615 and connected to a computing platform to which the pass-through connector device 605 is mounted. FIG. 6B shows the pass-through connector device 605 with devices 640, 645 connected to the connector receptacles 610, 615. As illustrated in FIG. 6B, when device 640 is connected to connector receptacle 610 and device 645 is connected to receptacle 615, contact pad 630a is coupled to contact pad 635a directly using the connector pins 620a, 625a of the pass-through connector device 605. This short, direct connection enables high speed signaling between devices 640 and 645 over the contact pads 630a and 635a, which may enable minimal signal integrity loss at this connection, as well as at any other direct connections between the respective contact pads (e.g., 630b, 635b) of the two devices 640, 645 facilitated through directly connected connector pins (e.g., 620b, 625b, etc.) of the pass-through connector device 605.

In some implementations of a pass-through connector device 605 include a subset of connector pins (e.g., 620c-d), which are not directly connected to corresponding pins in the other connector receptacle of the pass-through connector device 605, but are instead coupled to a backplane, bus, or other conductive trace on a PCB (e.g., 650) of the computing platform to which the pass-through connector device 605 is mounted and coupled. In this sense, this subset of connector pins may be coupled to the PCB as in conventional socket connectors. In some implementations, the subset of pins of the pass-through connector device 605 that are coupled to the backplane 655 of the PCB 650 (and not directly connected to pins of the other connector receptacle of the pass-through connector device 605) may be mapped to voltage-in (or power input), sideband signals, control signals, and/or other lower speed signal contacts (e.g., 630c-d) of the device. Correspondingly, device pads to be used for high speed signal lanes of the device may mapped to contact pins of the pass-through connector device 605 that are directly connected to corresponding pins of the other connector receptacle to enable the high speed signal integrity benefits of the pass-through connector device's direct socket-to-socket pin connection(s).

In some cases, facilitating an at least partially direct connection of two devices utilizing a pass-through connector device, such as discussed herein, may involve a remapping of pins at the device's connector. For instance, in order to align a finger pad (e.g., 630a) at a first device (e.g., 640) to the finger pad (e.g., 635a) of a second device (e.g., 645) using a common, or pass-through, pin set (e.g., pins 620a and 625a) of a pass-through connector device 605, may involve realigning the finger pad orientation of one of the devices' connectors. Such a realignment may not, in some cases, be practical or possible, particular in legacy devices and connector configurations. Some devices may connect to a socket connector via a cable connector. Cable connectors may be more easily realigned, with the wires within the cable being remapped to the cable connector to ensure that the cable connector finger pads are oriented to align with appropriate pass-through pin sets provided on the pass-through connector (through which the cable connects its device with another device), among other example implementations.

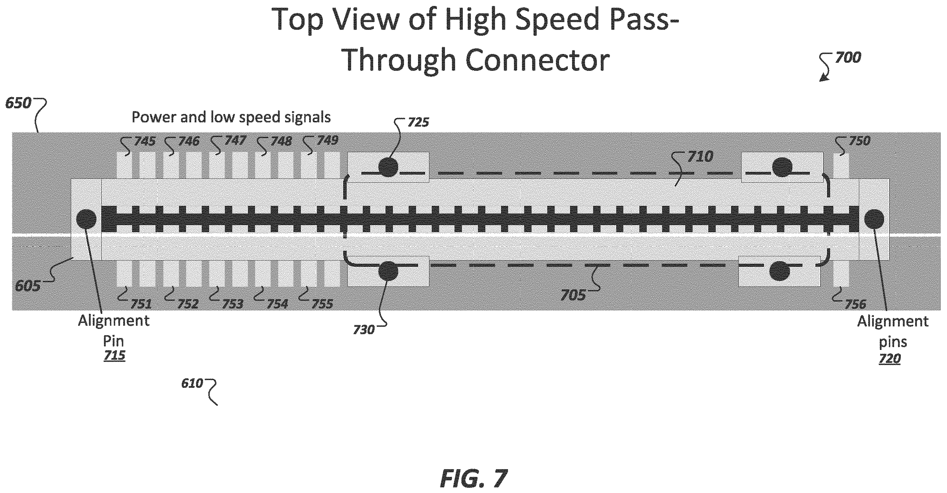

Turning to FIG. 7, a simplified block diagram 700 is shown of a top view of the example pass-through connector device 605 shown in FIGS. 6A-6B mounted to a PCB 650. In this view, the opening of connector receptacle 610 faces the viewer, while the opening of connector receptacle 615 is pointed away from the viewer. In this example, the dimensions of connector receptacle 610 are wider than that of connector receptacle 615. Mounting of the pass-through connector device 605 to the PCB 650 is facilitated through a cutout 705 in the PCB 650 allowing the pass-through connector device 605 to physically pass through the PCB 650 and present the opening of the second connector receptacle 615 on the (in this view) underside of the PCB and present the opening 705 of the first connector receptacle 615 at the (in this view) topside of the PCB 650. In some implementations, a rigid flange or shield element 710 may be provided to structurally reinforce the edges of the cutout 705. Additionally, fasteners, solder connections, or other physical connections used to secure the pass-through connector device 605 to the PCB 650 may be positioned based on the respective dimensions of the two connector receptacles (e.g., 610, 615) of the pass-through connector device 605. For instance, one or more fasteners (e.g., 715, 720) may be provided at each lateral end of the pass-through connector device 605. Additionally, intermediate fasteners (e.g., 725, 730) that connect the flange 710 to the PCB 650 may be provided, which are positioned to correspond to the end of the shorter of the two connector receptacles of the pass-through connector device 605. The intermediate fasteners (e.g., 725, 730) may be positioned to account for the forces that may be anticipated by a human technician or robot pushing a device (e.g., add-in card) into the smaller of the two connector receptacles of the pass-through connector device 605, among other example considerations.

As further shown in the example of FIG. 7, some of the pins of one or both of the socket connectors of the pass-through connector device 605 may be coupled to traces (e.g., 745-756) of the PCB 650. In some implementations, traces of the PCB coupled to the pass-through connector device 605 may be utilized to provide power to devices coupled to the socket connectors of the pass-through connector device 605 and/or for sideband and other lower speed signaling between a device connected to a socket of the pass-through connector device 605 and one or more other devices or elements of the computing platform.

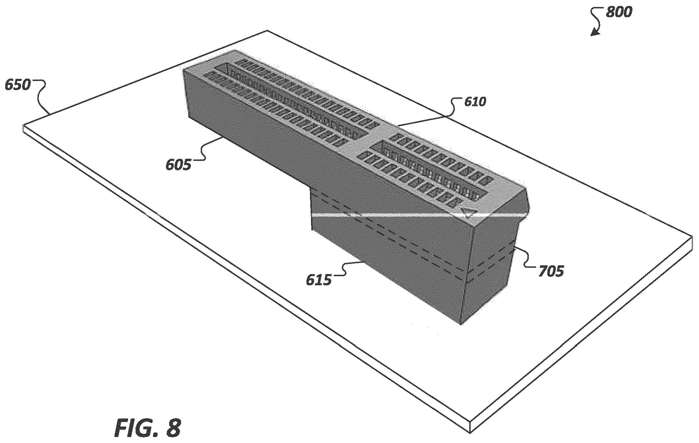

FIG. 8 is a perspective view 800 of an example pass-through connector device 605 fastened and coupled to a PCB 605 through a cutout 705. In FIG. 8, PCB 605 is presented translucently for purposes of illustrating the manner in which an example pass-through connector device 605 may pass through two sides of the PCB to accept (and at least partially directly connect) to different computing devices through the socket connectors of the pass-through connector device 605. In some alternative implementations, an example pass-through connector device 605 may be configured and fastened to a PCB such that both devices coupled to the two socket connectors of the pass-through connector device 605 are on the same side of the PCB. In one example, pass-through connector device 605 may adopt an "L"-shaped to elbow geometry, such that one of the connector receptacles is oriented parallel to the PCB, while the second is oriented perpendicular to the PCB surface, among other examples.

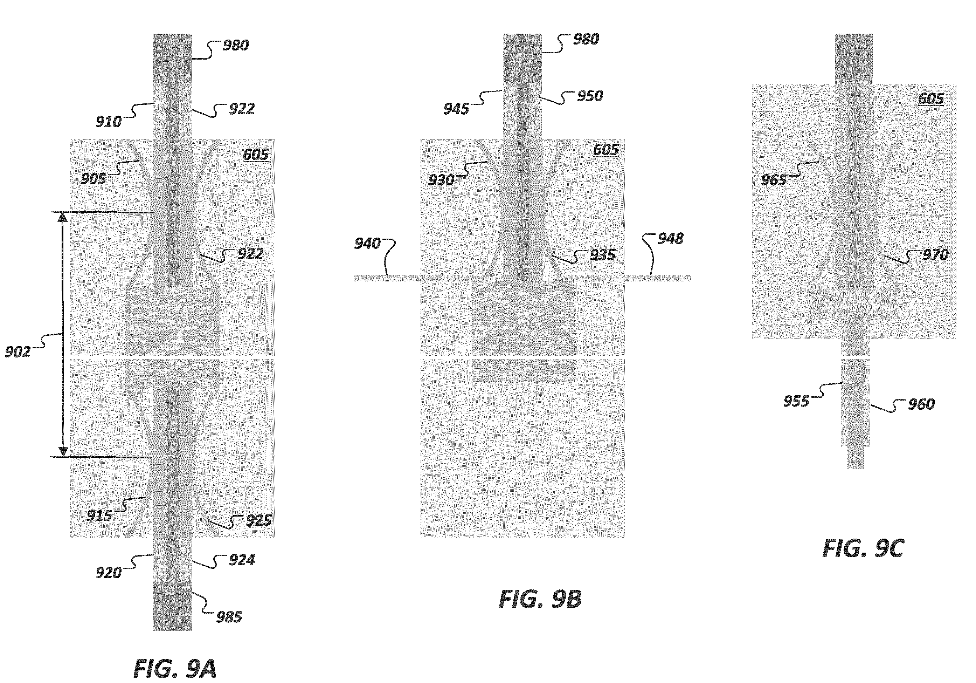

Turning to FIGS. 9A-9C, simplified block diagrams 900a-c are shown illustrating example configurations of pin contacts, which may be adopted with socket connectors of an example pass-through connector device. For instance, FIG. 9A shows a profile view of an example pass through pin type (e.g., for use in a press-fit type socket connector). A pass-through pin 902 includes a first pin segment 905 to contact a finger pad 910 of a first device 980 (inserted within a first one of the two socket connectors of the pass-through connector device 605) and a second pin segment 915 to contact a finger pad 920 of a second device 985 (inserted in the second socket connector of the pass-through connector device). In this example, the first and second pin segments are parts of a single, unitary conductive element, thereby forming a direct electrical connection between the first and second finger pads of the first and second devices. In this example, finger pads (e.g., 910 and 922, 915 and 924, etc.) may be provided on both sides of the device connectors. Accordingly, pass-through pin sets (e.g., pins 905 and 915, and pins 915 and 925) may be provided in the socket connector on both sides of the connector receptacle to engage the finger pads (e.g., 915, 920) on the second side of the devices' connectors.

In the example of FIG. 9B, another example of pins (e.g., 930, 935) are shown for inclusion in an example pass-through connector device 605. In this example, pins 930, 935, rather than facilitating a direct pass-through connection to another socket on the pass-through connector device, instead connect finger pads (e.g., 945, 950) of a device (e.g., 980) to traces (e.g., 940, 948) of a PCB board (e.g., to connect the corresponding to a backplane of the computing platform.

In the example of FIG. 9C, another implementation of example pins 955, 960 are shown for inclusion in an example pass-through connector device. For instance, a socket connector of a pass-through connector device may be implemented either as a receptacle (e.g., as shown in the example of FIGS. 8, 9A, 9B, etc.), a plug (e.g., to be inserted into a receptacle of the device), or a hybrid of plugs and receptacles. For instance, pins of the socket connector may be oriented as a receptacle (e.g., pins 965, 970) to receive a device connector inserted into the receptacle or as a plug (e.g., pins 955, 960), which may be inserted into a receptacle of another device (not shown) to facilitate the connection between plug-type socket connector and the other device. In the example of FIG. 9C, pins 955-970 are implemented as pass-through pins, with pin 965 of the receptacle-type socket connector directly connected to pin 955 of a plug-type socket connector, and pin 970 directly connected to pin 960. As should be appreciated, these various embodiments of pin and socket connector types (e.g., plug vs. receptacle, various form factors, etc.), enable pass-through connector devices to be implemented that facilitate direct connections between a variety of different pairs of devices of various technologies and form factors.

As introduced above, pass-through connector devices may be advantageously deployed within computing platforms to strategically alleviate total signal integrity budget loss by providing a more robust way to transmit high speed signals between pairs of devices and minimize the use of PCB traces as the transition vehicle between two different sockets. Further, a pass-through connector device may enable the continuing support of high speed backplane (HSBP)-based topologies for storage use cases for PCIe 6.0 and beyond. For instance, depending on the printed circuit board materials used, there could be a range of 0.96dB to 0.77dB per inch of signal loss utilizing PCB backplanes as the primary transition medium between devices within a computing system. Through the strategic use of pass-through connector devices, meaningful lengths (e.g., 1-2 inches) of trace-based connections for high-speed signaling between end-devices and the root complex may be eliminated. Non-high speed signals may continue to be facilitated through the PCB, with the pins of the pass-through connector device broken into several sections depending on the signal integrity requirements of each pin.

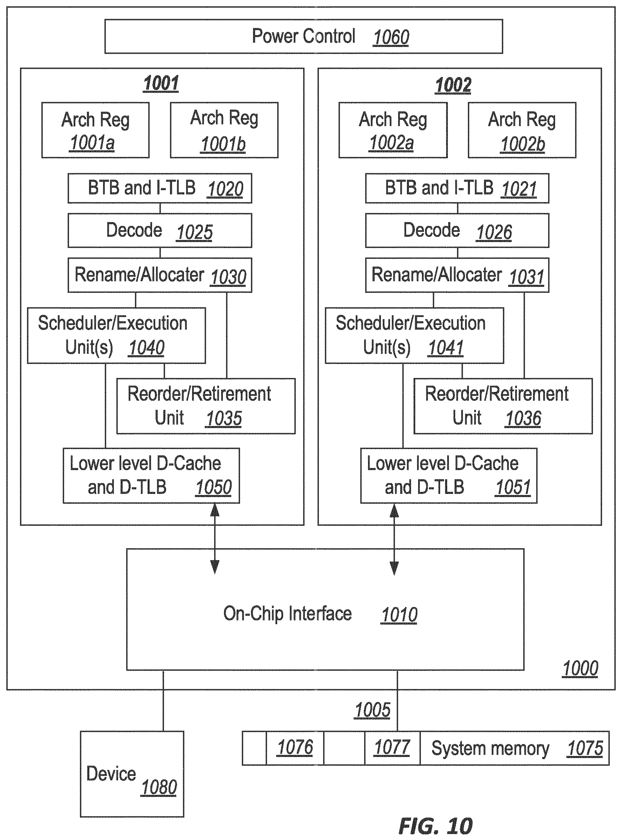

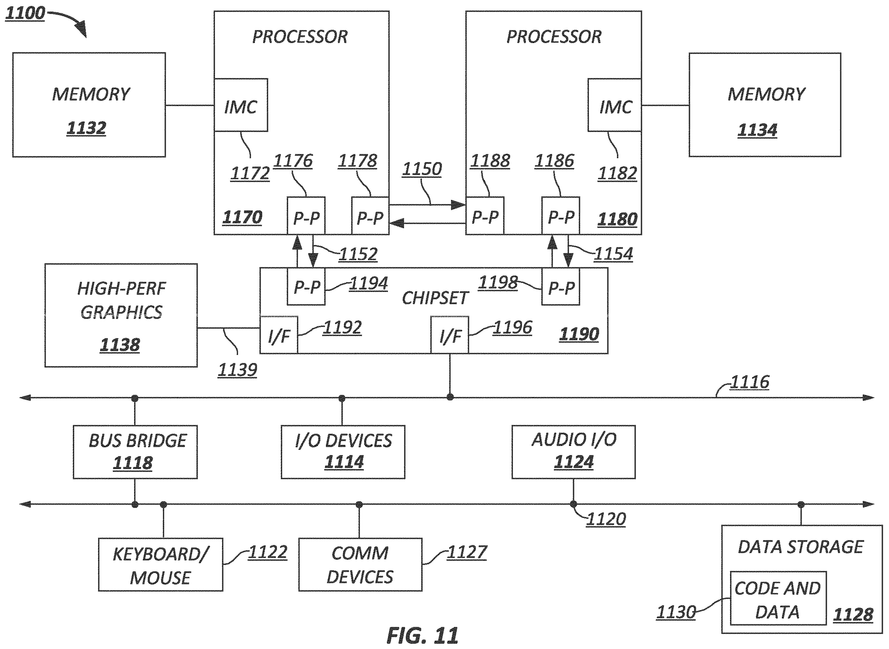

Note that the apparatus', methods', and systems described above may be implemented in any electronic device or system as aforementioned. For instance, the computing platforms illustrated in the examples of FIGS. 10 and 11 show connections between various computing devices at least a portion of which may be implemented using corresponding pass-through connector devices with socket connectors compatible with the two connected devices.

Referring to FIG. 10, an embodiment of a block diagram for a computing system including a multicore processor is depicted. Processor 1000 includes any processor or processing device, such as a microprocessor, an embedded processor, a digital signal processor (DSP), a network processor, a handheld processor, an application processor, a co-processor, a system on a chip (SOC), or other device to execute code. Processor 1000, in one embodiment, includes at least two cores-core 1001 and 1002, which may include asymmetric cores or symmetric cores (the illustrated embodiment). However, processor 1000 may include any number of processing elements that may be symmetric or asymmetric.

In one embodiment, a processing element refers to hardware or logic to support a software thread. Examples of hardware processing elements include: a thread unit, a thread slot, a thread, a process unit, a context, a context unit, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor (or processor socket) typically refers to an integrated circuit, which potentially includes any number of other processing elements, such as cores or hardware threads.

A core often refers to logic located on an integrated circuit capable of maintaining an independent architectural state, wherein each independently maintained architectural state is associated with at least some dedicated execution resources. In contrast to cores, a hardware thread typically refers to any logic located on an integrated circuit capable of maintaining an independent architectural state, wherein the independently maintained architectural states share access to execution resources. As can be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

Physical processor 1000, as illustrated in FIG. 10, includes two cores-core 1001 and 1002. Here, core 1001 and 1002 are considered symmetric cores, e.g., cores with the same configurations, functional units, and/or logic. In another embodiment, core 1001 includes an out-of-order processor core, while core 1002 includes an in-order processor core. However, cores 1001 and 1002 may be individually selected from any type of core, such as a native core, a software managed core, a core adapted to execute a native Instruction Set Architecture (ISA), a core adapted to execute a translated Instruction Set Architecture (ISA), a co-designed core, or other known core. In a heterogeneous core environment (e.g., asymmetric cores), some form of translation, such a binary translation, may be utilized to schedule or execute code on one or both cores. Yet to further the discussion, the functional units illustrated in core 1001 are described in further detail below, as the units in core 1002 operate in a similar manner in the depicted embodiment.

As depicted, core 1001 includes two hardware threads 1001a and 1001b, which may also be referred to as hardware thread slots 1001a and 1001b. Therefore, software entities, such as an operating system, in one embodiment potentially view processor 1000 as four separate processors, e.g., four logical processors or processing elements capable of executing four software threads concurrently. As alluded to above, a first thread is associated with architecture state registers 1001a, a second thread is associated with architecture state registers 1001b, a third thread may be associated with architecture state registers 1002a, and a fourth thread may be associated with architecture state registers 1002b. Here, each of the architecture state registers (1001a, 1001b, 1002a, and 1002b) may be referred to as processing elements, thread slots, or thread units, as described above. As illustrated, architecture state registers 1001a are replicated in architecture state registers 1001b, so individual architecture states/contexts are capable of being stored for logical processor 1001a and logical processor 1001b. In core 1001, other smaller resources, such as instruction pointers and renaming logic in allocator and renamer block 1030 may also be replicated for threads 1001a and 1001b. Some resources, such as re-order buffers in reorder/retirement unit 1035, ILTB 1020, load/store buffers, and queues may be shared through partitioning. Other resources, such as general purpose internal registers, page-table base register(s), low-level data-cache and data-TLB 1015, execution unit(s) 1040, and portions of out-of- order unit 1035 are potentially fully shared.

Processor 1000 often includes other resources, which may be fully shared, shared through partitioning, or dedicated by/to processing elements. In FIG. 10, an embodiment of a purely exemplary processor with illustrative logical units/resources of a processor is illustrated. Note that a processor may include, or omit, any of these functional units, as well as include any other known functional units, logic, or firmware not depicted. As illustrated, core 1001 includes a simplified, representative out-of-order (OOO) processor core. But an in-order processor may be utilized in different embodiments. The OOO core includes a branch target buffer 1020 to predict branches to be executed/taken and an instruction-translation buffer (I-TLB) 1020 to store address translation entries for instructions.

Core 1001 further includes decode module 1025 coupled to fetch unit 1020 to decode fetched elements. Fetch logic, in one embodiment, includes individual sequencers associated with thread slots 1001a, 1001b, respectively. Usually core 1001 is associated with a first ISA, which defines/specifies instructions executable on processor 1000. Often machine code instructions that are part of the first ISA include a portion of the instruction (referred to as an opcode), which references/specifies an instruction or operation to be performed. Decode logic 1025 includes circuitry that recognizes these instructions from their opcodes and passes the decoded instructions on in the pipeline for processing as defined by the first ISA. For example, as discussed in more detail below decoders 1025, in one embodiment, include logic designed or adapted to recognize specific instructions, such as transactional instruction. As a result of the recognition by decoders 1025, the architecture or core 1001 takes specific, predefined actions to perform tasks associated with the appropriate instruction. It is important to note that any of the tasks, blocks, operations, and methods described herein may be performed in response to a single or multiple instructions; some of which may be new or old instructions. Note decoders 1026, in one embodiment, recognize the same ISA (or a subset thereof). Alternatively, in a heterogeneous core environment, decoders 1026 recognize a second ISA (either a subset of the first ISA or a distinct ISA).

In one example, allocator and renamer block 1030 includes an allocator to reserve resources, such as register files to store instruction processing results. However, threads 1001a and 1001b are potentially capable of out-of-order execution, where allocator and renamer block 1030 also reserves other resources, such as reorder buffers to track instruction results. Unit 1030 may also include a register renamer to rename program/instruction reference registers to other registers internal to processor 1000. Reorder/retirement unit 1035 includes components, such as the reorder buffers mentioned above, load buffers, and store buffers, to support out-of-order execution and later in-order retirement of instructions executed out-of-order.

Scheduler and execution unit(s) block 1040, in one embodiment, includes a scheduler unit to schedule instructions/operation on execution units. For example, a floating point instruction is scheduled on a port of an execution unit that has an available floating point execution unit. Register files associated with the execution units are also included to store information instruction processing results. Exemplary execution units include a floating point execution unit, an integer execution unit, a jump execution unit, a load execution unit, a store execution unit, and other known execution units.

Lower level data cache and data translation buffer (D-TLB) 1050 are coupled to execution unit(s) 1040. The data cache is to store recently used/operated-on elements, such as data operands, which are potentially held in memory coherency states. The D-TLB is to store recent virtual/linear to physical address translations. As a specific example, a processor may include a page table structure to break physical memory into a plurality of virtual pages.

Here, cores 1001 and 1002 share access to higher-level or further-out cache, such as a second level cache associated with on-chip interface 1010. Note that higher-level or further-out refers to cache levels increasing or getting further way from the execution unit(s). In one embodiment, higher-level cache is a last-level data cache-last cache in the memory hierarchy on processor 1000-such as a second or third level data cache. However, higher level cache is not so limited, as it may be associated with or include an instruction cache. A trace cache-a type of instruction cache-instead may be coupled after decoder 1025 to store recently decoded traces. Here, an instruction potentially refers to a macro-instruction (e.g., a general instruction recognized by the decoders), which may decode into a number of micro-instructions (micro-operations).

In the depicted configuration, processor 1000 also includes on-chip interface module 1010. Historically, a memory controller, which is described in more detail below, has been included in a computing system external to processor 1000. In this scenario, on-chip interface 1010 is to communicate with devices external to processor 1000, such as system memory 1075, a chipset (often including a memory controller hub to connect to memory 1075 and an I/O controller hub to connect peripheral devices), a memory controller hub, a northbridge, or other integrated circuit. And in this scenario, bus 1005 may include any known interconnect, such as multi-drop bus, a point-to-point interconnect, a serial interconnect, a parallel bus, a coherent (e.g. cache coherent) bus, a layered protocol architecture, a differential bus, and a GTL bus.

Memory 1075 may be dedicated to processor 1000 or shared with other devices in a system. Common examples of types of memory 1075 include DRAM, SRAM, non-volatile memory (NV memory), and other known storage devices. Note that device 1080 may include a graphic accelerator, processor or card coupled to a memory controller hub, data storage coupled to an I/O controller hub, a wireless transceiver, a flash device, an audio controller, a network controller, or other known device.

Recently however, as more logic and devices are being integrated on a single die, such as SOC, each of these devices may be incorporated on processor 1000. For example in one embodiment, a memory controller hub is on the same package and/or die with processor 1000. Here, a portion of the core (an on-core portion) 1010 includes one or more controller(s) for interfacing with other devices such as memory 1075 or a graphics device 1080. The configuration including an interconnect and controllers for interfacing with such devices is often referred to as an on-core (or un-core configuration). As an example, on-chip interface 1010 includes a ring interconnect for on-chip communication and a high-speed serial point-to-point link 1005 for off-chip communication. Yet, in the SOC environment, even more devices, such as the network interface, co-processors, memory 1075, graphics processor 1080, and any other known computer devices/interface may be integrated on a single die or integrated circuit to provide small form factor with high functionality and low power consumption.

In one embodiment, processor 1000 is capable of executing a compiler, optimization, and/or translator code 1077 to compile, translate, and/or optimize application code 1076 to support the apparatus and methods described herein or to interface therewith. A compiler often includes a program or set of programs to translate source text/code into target text/code. Usually, compilation of program/application code with a compiler is done in multiple phases and passes to transform hi-level programming language code into low-level machine or assembly language code. Yet, single pass compilers may still be utilized for simple compilation. A compiler may utilize any known compilation techniques and perform any known compiler operations, such as lexical analysis, preprocessing, parsing, semantic analysis, code generation, code transformation, and code optimization.

Larger compilers often include multiple phases, but most often these phases are included within two general phases: (1) a front-end, e.g., generally where syntactic processing, semantic processing, and some transformation/optimization may take place, and (2) a back-end, e.g., generally where analysis, transformations, optimizations, and code generation takes place. Some compilers refer to a middle, which illustrates the blurring of delineation between a front-end and back end of a compiler. As a result, reference to insertion, association, generation, or other operation of a compiler may take place in any of the aforementioned phases or passes, as well as any other known phases or passes of a compiler. As an illustrative example, a compiler potentially inserts operations, calls, functions, etc. in one or more phases of compilation, such as insertion of calls/operations in a front-end phase of compilation and then transformation of the calls/operations into lower-level code during a transformation phase. Note that during dynamic compilation, compiler code or dynamic optimization code may insert such operations/calls, as well as optimize the code for execution during runtime. As a specific illustrative example, binary code (already compiled code) may be dynamically optimized during runtime. Here, the program code may include the dynamic optimization code, the binary code, or a combination thereof.

Similar to a compiler, a translator, such as a binary translator, translates code either statically or dynamically to optimize and/or translate code. Therefore, reference to execution of code, application code, program code, or other software environment may refer to: (1) execution of a compiler program(s), optimization code optimizer, or translator either dynamically or statically, to compile program code, to maintain software structures, to perform other operations, to optimize code, or to translate code; (2) execution of main program code including operations/calls, such as application code that has been optimized/compiled; (3) execution of other program code, such as libraries, associated with the main program code to maintain software structures, to perform other software related operations, or to optimize code; or (4) a combination thereof.

Referring now to FIG. 11, shown is a block diagram of a second system 1100 in accordance with an embodiment of the present disclosure. As shown in FIG. 11, multiprocessor system 1100 is a point-to-point interconnect system, and includes a first processor 1170 and a second processor 1180 coupled via a point-to-point interconnect 1150. Each of processors 1170 and 1180 may be some version of a processor. In one embodiment, 1152 and 1154 are part of a serial, point-to-point coherent interconnect fabric, such as QPI or UPI, among other examples.

While shown with only two processors 1170, 1180, it is to be understood that the scope of the present disclosure is not so limited. In other embodiments, one or more additional processors may be present in a given processor.

Processors 1170 and 1180 are shown including integrated memory controller units 1172 and 1182, respectively. Processor 1170 also includes as part of its bus controller units point-to-point (P-P) interfaces 1176 and 1178; similarly, second processor 1180 includes P-P interfaces 1186 and 1188. Processors 1170, 1180 may exchange information via a point-to-point (P-P) interface 1150 using P-P interface circuits 1178, 1188. As shown in FIG. 11, IMCs 1172 and 1182 couple the processors to respective memories, namely a memory 1132 and a memory 1134, which may be portions of main memory locally attached to the respective processors.

Processors 1170, 1180 each exchange information with a chipset 1190 via individual P-P interfaces 1152, 1154 using point to point interface circuits 1176, 1194, 1186, 1198. Chipset 1190 also exchanges information with a high-performance graphics circuit 1138 via an interface circuit 1192 along a high-performance graphics interconnect 1139.

A shared cache (not shown) may be included in either processor or outside of both processors; yet connected with the processors via P-P interconnect, such that either or both processors' local cache information may be stored in the shared cache if a processor is placed into a low power mode.

Chipset 1190 may be coupled to a first bus 1116 via an interface 1196. In one embodiment, first bus 1116 may be a Peripheral Component Interconnect (PCI) bus, or a bus such as a PCIe bus or another third generation I/O interconnect bus, although the scope of the present disclosure is not so limited.

As shown in FIG. 11, various I/O devices 1114 are coupled to first bus 1116, along with a bus bridge 1118 which couples first bus 1116 to a second bus 1120. In one embodiment, second bus 1120 includes a low pin count (LPC) bus. Various devices are coupled to second bus 1120 including, for example, a keyboard and/or mouse 1122, communication devices 1127 and a storage unit 1128 such as a disk drive or other mass storage device which often includes instructions/code and data 1130, in one embodiment. Further, an audio I/O 1124 is shown coupled to second bus 1120. Note that other architectures are possible, where the included components and interconnect architectures vary. For example, instead of the point-to-point architecture of FIG. 11, a system may implement a multi-drop bus or other such architecture.

Computing systems can include various combinations of components. These components may be implemented as ICs, portions thereof, discrete electronic devices, or other modules, logic, hardware, software, firmware, or a combination thereof adapted in a computer system, or as components otherwise incorporated within a chassis of the computer system. However, it is to be understood that some of the components shown may be omitted, additional components may be present, and different arrangement of the components shown may occur in other implementations. As a result, the solutions described above may be implemented in any portion of one or more of the interconnects illustrated or described herein.

A processor, in one embodiment, includes a microprocessor, multi-core processor, multithreaded processor, an ultra low voltage processor, an embedded processor, or other known processing element. In the illustrated implementation, processor acts as a main processing unit and central hub for communication with many of the various components of the system. As one example, processor is implemented as a system on a chip (SoC). As a specific illustrative example, processor includes an Intel^{®} Architecture Core^{™}-based processor such as an i3, i5, i7 or another such processor available from Intel Corporation. However, understand that other low power processors such as available from Advanced Micro Devices, Inc. (AMD) of Sunnyvale, CA, a MIPS-based design from MIPS Technologies, Inc. of Sunnyvale, CA, an ARM-based design licensed from ARM Holdings, Ltd. or customer thereof, or their licensees or adopters may instead be present in other embodiments such as an Apple A5/A6 processor, a Qualcomm Snapdragon processor, or TI OMAP processor. Note that many of the customer versions of such processors are modified and varied; however, they may support or recognize a specific instruction set that performs defined algorithms as set forth by the processor licensor. Here, the microarchitectural implementation may vary, but the architectural function of the processor is usually consistent. Certain details regarding the architecture and operation of processor in one implementation will be discussed further below to provide an illustrative example.

Processor, in one embodiment, communicates with a system memory. As an illustrative example, which in an embodiment can be implemented via multiple memory devices to provide for a given amount of system memory. As examples, the memory can be in accordance with a Joint Electron Devices Engineering Council (JEDEC) low power double data rate (LPDDR)-based design such as the current LPDDR2 standard according to JEDEC JESD 209-2E (published April 2009), or a next generation LPDDR standard to be referred to as LPDDR3 or LPDDR4 that will offer extensions to LPDDR2 to increase bandwidth. In various implementations the individual memory devices may be of different package types such as single die package (SDP), dual die package (DDP) or quad die package (13P). These devices, in some embodiments, are directly soldered onto a motherboard to provide a lower profile solution, while in other embodiments the devices are configured as one or more memory modules that in turn couple to the motherboard by a given connector. And of course, other memory implementations are possible such as other types of memory modules, e.g., dual inline memory modules (DIMMs) of different varieties including but not limited to microDIMMs, MiniDIMMs. In a particular illustrative embodiment, memory is sized between 2GB and 16GB, and may be configured as a DDR3LM package or an LPDDR2 or LPDDR3 memory that is soldered onto a motherboard via a ball grid array (BGA).

To provide for persistent storage of information such as data, applications, one or more operating systems and so forth, a mass storage may also couple to processor. In various embodiments, to enable a thinner and lighter system design as well as to improve system responsiveness, this mass storage may be implemented via a SSD. However in other embodiments, the mass storage may primarily be implemented using a hard disk drive (HDD) with a smaller amount of SSD storage to act as a SSD cache to enable non-volatile storage of context state and other such information during power down events so that a fast power up can occur on re-initiation of system activities. A flash device may be coupled to processor, e.g., via a serial peripheral interface (SPI). This flash device may provide for non-volatile storage of system software, including a basic input/output software (BIOS) as well as other firmware of the system.

In various embodiments, mass storage of the system is implemented by a SSD alone or as a disk, optical or other drive with an SSD cache. In some embodiments, the mass storage is implemented as a SSD or as a HDD along with a restore (RST) cache module. In various implementations, the HDD provides for storage of between 320GB-4 terabytes (TB) and upward while the RST cache is implemented with a SSD having a capacity of 24GB-256GB. Note that such SSD cache may be configured as a single level cache (SLC) or multi-level cache (MLC) option to provide an appropriate level of responsiveness. In a SSD-only option, the module may be accommodated in various locations such as in a mSATA or NGFF slot. As an example, an SSD has a capacity ranging from 120GB-1 TB.

A design may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase 'to' or 'configured to,' in one embodiment, refers to arranging, putting together, manufacturing, offering to sell, importing and/or designing an apparatus, hardware, logic, or element to perform a designated or determined task. In this example, an apparatus or element thereof that is not operating is still 'configured to' perform a designated task if it is designed, coupled, and/or interconnected to perform said designated task. As a purely illustrative example, a logic gate may provide a 0 or a 1 during operation. But a logic gate 'configured to' provide an enable signal to a clock does not include every potential logic gate that may provide a 1 or 0. Instead, the logic gate is one coupled in some manner that during operation the 1 or 0 output is to enable the clock. Note once again that use of the term 'configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example, the decimal number ten may also be represented as a binary value of 1010 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, e.g., reset, while an updated value potentially includes a low logical value, e.g., set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (e.g., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

## Claims

1. An apparatus comprising:
a pass-through connector (605) comprising:
a first socket connector (610) to connect to a first device, wherein the first socket connector comprises a first set of pins to connect to first contacts on the first device; and
a second socket connector (615) to connect to a second device, wherein the second socket connector comprises a second set of pins to directly connect to the first set of pins within the pass-through connector, and a third set of pins to connect to a bus external to the pass-through connector, wherein the second set of pins are to connect second contacts on the second device to the first contacts on the first device, and the third set of pins are to connect third contacts on the second device to the bus.

2. The apparatus of Claim 1, wherein the first socket connector comprises a connector receptacle to accept insertion of the first device.

3. The apparatus of Claim 1, wherein the first socket connector comprises a plug-style connector to insert into the first device to connect to the first device.

4. The apparatus of any one of Claims 1-3, wherein at least one of the first device or the second device comprises an add-in card device.

5. The apparatus of any one of Claims 1-4, wherein the first socket connector is configured to connect to devices of a first form factor, the first device is of the first form factor, the second socket connector is configured to connect to devices of a different second form factor, and the second device is of the second form factor.

6. The apparatus of Claim 5, wherein the first form factor and the second form factor are defined based on an interconnect protocol specification.

7. The apparatus of Claim 6, wherein the interconnect protocol specification comprises a specification of a Peripheral Component Interconnect Express (PCIe)-based protocol.

8. The apparatus of any one of Claims 1-7, wherein high speed signals are to be transmitted between the first contacts on the first device and the second contacts on the second device.

9. The apparatus of Claim 8, wherein signals to be communicated on the third set of contacts are to be transmitted at lower speeds than the high speed signals.

10. The apparatus of Claim 8, wherein the third set of contacts are to be used to carry one or more of a voltage from a power source, or one or more sideband signals.

11. The apparatus of Claim 8, wherein the high speed signals are defined based on one of a PCIe-based protocol or a Compute Express Link (CXL)-based protocol.

12. The apparatus of any one of Claims 1-11, wherein the bus comprises a set of traces on a printed circuit board (PCB).

## Patentansprüche

1. Einrichtung, umfassend:
einen Durchgangsverbinder (605), umfassend:
einen ersten Buchsenverbinder (610) zum Verbinden mit einer ersten Vorrichtung, wobei der erste Buchsenverbinder einen ersten Satz von Pins zum Verbinden mit ersten Kontakten an der ersten Vorrichtung umfasst; und
einen zweiten Buchsenverbinder (615) zum Verbinden mit einer zweiten Vorrichtung, wobei der zweite Buchsenverbinder einen zweiten Satz von Pins zum direkten Verbinden mit dem ersten Satz von Pins innerhalb des Durchgangsverbinders und einen dritten Satz von Pins zum Verbinden mit einem Bus außerhalb des Durchgangsverbinders umfasst, wobei der zweite Satz von Pins dazu dient, zweite Kontakte an der zweiten Vorrichtung mit den ersten Kontakten an der ersten Vorrichtung zu verbinden, und der dritte Satz von Pins dazu dient, dritte Kontakte an der zweiten Vorrichtung mit dem Bus zu verbinden.

2. Einrichtung nach Anspruch 1, wobei der erste Buchsenverbinder eine Verbinderaufnahme zum Aufnehmen eines Einführens der ersten Vorrichtung umfasst.

3. Einrichtung nach Anspruch 1, wobei der erste Buchsenverbinder einen Steckverbinder umfasst, der in die erste Vorrichtung eingeführt wird, um eine Verbindung mit der ersten Vorrichtung herzustellen.

4. Einrichtung nach einem der Ansprüche 1 bis 3, wobei mindestens eines der ersten oder der zweiten Vorrichtung eine Zusatzkartenvorrichtung umfasst.

5. Einrichtung nach einem der Ansprüche 1 bis 4, wobei der erste Buchsenverbinder so konfiguriert ist, dass er mit Vorrichtungen eines ersten Formfaktors verbunden werden kann, die erste Vorrichtung den ersten Formfaktor aufweist, der zweite Buchsenverbinder so konfiguriert ist, dass er mit Vorrichtungen eines anderen zweiten Formfaktors verbunden werden kann, und die zweite Vorrichtung den zweiten Formfaktor aufweist.

6. Einrichtung nach Anspruch 5, wobei der erste Formfaktor und der zweite Formfaktor auf Grundlage einer Verbindungsprotokollspezifikation definiert sind.

7. Einrichtung nach Anspruch 6, wobei die Verbindungsprotokollspezifikation eine Spezifikation eines auf PCIe (Peripheral Component Interconnect Express) basierenden Protokolls umfasst.

8. Einrichtung nach einem der Ansprüche 1 bis 7, wobei Hochgeschwindigkeitssignale zwischen den ersten Kontakten an der ersten Vorrichtung und den zweiten Kontakten an der zweiten Vorrichtung übertragen werden sollen.

9. Einrichtung nach Anspruch 8, wobei Signale, die auf dem dritten Satz von Kontakten übertragen werden sollen, mit geringeren Geschwindigkeiten als die Hochgeschwindigkeitssignale übertragen werden sollen.

10. Einrichtung nach Anspruch 8, wobei der dritte Satz von Kontakten dazu dient, eine Spannung von einer Leistungsquelle und/oder ein oder mehrere Seitenbandsignale zu übertragen.

11. Einrichtung nach Anspruch 8, wobei die Hochgeschwindigkeitssignale auf Grundlage eines PCIebasierten Protokolls oder eines CXL- (Compute Express Link) basierten Protokolls definiert sind.

12. Einrichtung nach einem der Ansprüche 1 bis 11, wobei der Bus einen Satz von Leiterbahnen auf einer Leiterplatte (PCB) umfasst.

## Revendications

1. Appareil comprenant :
un connecteur traversant (605) comprenant :
un premier connecteur femelle (610) destiné à être connecté à un premier dispositif, le premier connecteur femelle comprenant un premier ensemble de broches destinées à être connectées à des premiers contacts sur le premier dispositif ; et
un deuxième connecteur femelle (615) pour se connecter à un deuxième dispositif, le deuxième connecteur femelle comprenant un deuxième ensemble de broches pour se connecter directement au premier ensemble de broches à l'intérieur du connecteur traversant, et un troisième ensemble de broches pour se connecter à un bus externe au connecteur traversant, le deuxième ensemble de broches servant à connecter des deuxièmes contacts sur le deuxième dispositif aux premiers contacts sur le premier dispositif, et le troisième ensemble de broches servant à connecter des troisièmes contacts sur le deuxième dispositif au bus.

2. Appareil selon la revendication 1, le premier connecteur femelle comprenant un réceptacle de connecteur pour accepter l'insertion du premier dispositif.

3. Appareil selon la revendication 1, le premier connecteur femelle comprenant un connecteur de type fiche destiné à être inséré dans le premier dispositif pour se connecter au premier dispositif.

4. Appareil selon l'une quelconque des revendications 1 à 3, au moins un du premier dispositif ou du deuxième dispositif comprenant un dispositif de carte d'ajout.

5. Appareil selon l'une quelconque des revendications 1 à 4, le premier connecteur femelle étant configuré pour se connecter à des dispositifs d'un premier facteur de forme, le premier dispositif étant du premier facteur de forme, le deuxième connecteur femelle étant configuré pour se connecter à des dispositifs d'un deuxième facteur de forme différent, et le deuxième dispositif étant du deuxième facteur de forme.

6. Appareil selon la revendication 5, le premier facteur de forme et le deuxième facteur de forme étant définis sur la base d'une spécification de protocole d'interconnexion.

7. Appareil selon la revendication 6, la spécification de protocole d'interconnexion comprenant une spécification de protocole basée sur PCI Express, Peripheral Component Interconnect Express, (PCI-e).

8. Appareil selon l'une quelconque des revendications 1 à 7, des signaux à grande vitesse devant être transmis entre les premiers contacts sur le premier dispositif et les deuxièmes contacts sur le deuxième dispositif.

9. Appareil selon la revendication 8, les signaux à communiquer sur le troisième ensemble de contacts devant être transmis à des vitesses inférieures aux signaux à grande vitesse.

10. Appareil selon la revendication 8, le troisième ensemble de contacts devant être utilisé pour transporter un ou plusieurs signaux parmi une tension provenant d'une source d'alimentation, ou un ou plusieurs signaux de bande latérale.

11. Appareil selon la revendication 8, les signaux à grande vitesse étant définis sur la base de l'un d'un protocole basé sur PCIe ou d'un protocole basé sur Compute Express Link (CXL).

12. Appareil selon l'une quelconque des revendications 1 à 11, le bus comprenant un ensemble de traces sur une carte de circuit imprimé (PCB).
